# EUROPEAN PATENT APPLICATION

(11) **EP 3 318 120 A1**
(43) Date of publication of application: **09.05.2018**
(21) Application number: 17199479.1
(22) Date of filing: 31.10.2017
(51) Int. Cl.: A01G 25/09

(54) **AN IRRIGATION MACHINE**

(30) Priority: 04.11.2016 IT 201600111262; 04.11.2016 IT 201600111271
(71) Applicant: Ocmis Irrigazione S.P.A., 41014 Castelvetro di Modena (Modena) (IT)
(72) Inventor: COLLI, Roberto, 41014 CASTELVETRO DI MODENA (MODENA) (IT)
(74) Representative: Gagliardelli, Fabrizio

(57) **Abstract**

The irrigation machine (1) comprises: a plurality of supporting spans (3), delimited and supported by respective self-propelled support elements (2), wherein each support element (2) has a respective movement carriage provided with a respective motor; means for transporting and dispensing water (4) supported by said plurality of supporting spans (3); a plurality of joints (6), each interposed between a respective pair of adjacent spans (3) configured so as to connect said adjacent spans (3); a plurality of sensors configured to detect operating parameters of the machine; and a control unit (C) configured to manage the operation of said machine according to the operating parameters received from said sensors, transmission means (D) connecting the sensors to the control unit (C), among which angular sensors are provided, and which are configured for a communication using a CAN-bus protocol.

## Description

The present invention relates to the sector of machines for agriculture.

In particular, the present invention relates to an irrigation machine.

Irrigation machines, when used for large-area terrains, are normally composed of a series of motorized or non-motorized support elements that delimit spans, realised for example by tubes that can be used for passage of water and the cabling required for the operation of the machine so as to be able to reach all the surface to be irrigated.

The irrigation machine can be set up using various configurations, enabling an improvement in efficiency on the basis of the characteristics of the terrain to be irrigated, the main ones being pivot, linear and hippodrome configurations.

In the "pivot" type configuration, a plurality of spans are arranged in a row, at the joints of which self-propelling support elements are arranged, and one of the support elements at the end of the row is fixed while the others are motorized, so that the machine carries out a circular motion about the fixed support element.

In the linear type, differently to the pivot type, all the support elements are motorized and the machine carries out an inversion of direction as soon as it reaches the end of its run.

In the hippodrome type all the support elements are motorised, but when the machine reaches the end of its run the machine rotates by 180° about one of the support elements located at the ends, then returns to linear advancement.

Presently known irrigation machines have a series of problems: in particular one of the main problems is connected to the management of information necessary for correct operation of the machine.

The machines currently available on the market have a series of sensors and actuators performing the task of monitoring a plurality of parameters relative to the operational conditions of the machine on which they are mounted.

For example, there might be pressure sensors of the water, flow meters for measuring the amount of water dispensed, pressure sensors in the wheels of the movement systems of the machine, sensors configured for measuring the correct alignment of the structural elements of the machine and many others.

While ensuring a greater ability to supervise the irrigation process, the large number of sensors leads to a similarly high number of cables required for correct connection of the sensors with a central control unit, or with the actuator relative to a determined sensor, leading to a high degree of complication in the set-up of the machine as well as a considerable size and increase in weight that the machine has to support due to the numerous cables.

Further, known irrigation machines comprise joints equipped with electromechanical switches configured for entering into action, modifying the motion regime of the trellis they are coupled to, should the angle between the two spans joined by the joints exceed a certain predefined threshold level.

However, this solution has a series of critical points, primarily that each time the machine is prepared for use, each electromechanical switch requires individual regulation, in particular for plants of a considerable length, with a considerable lengthening of the time necessary for predisposing the machine before its use.

Further, some problems are intrinsic to the operating method of the electromechanical switch; in fact, known systems have an "intermittent operation": the support elements only move when the switch is turned on and stop when the switch is turned off.

In particular, the operation of the irrigation machine includes that on start-up a first span is moved while all the others are stationary.

As soon as the electromechanical switch of the joint located between the first span and a second span adjacent thereto detects a de-alignment angle that is greater than the predetermined angle, the support elements of the second span are set in motion.

The movement of the second span will lead to an increase in the de-alignment angle between the second span and a third span adjacent thereto, which switches a second electromechanical switch and so on.

In this way, the motion is transferred from the first span of the irrigation machine up to the last, in the form of propagation of the de-alignment angle, so that the first span draws all the others during its motion.

However, this operating method has a series of negative consequences. Firstly, there is high wear on the motors moving the support elements as the motors must continually activate and stop each time the de-alignment angle is exceeded or recovered; lastly, as it is impossible to define *a priori* when a span is halted or in movement and consequently decide when to activate the irrigators or not, the irrigation of the terrain will be nonhomogeneous and might be excessive in some points and insufficient in others.

In this context, the technical task underlying the present invention is to provide an irrigation machine which obviates at least some of the drawbacks in the prior art as described above.

The stated technical task and specified aims are substantially attained by an irrigation machine realised according to claim 1.

Further characteristics and advantages of the present invention will become more apparent from the approximate and thus non-limiting description of a preferred, but not exclusive, embodiment of an irrigation machine, as illustrated in the accompanying drawings, in which:
- figure 1 illustrates an irrigation machine according to a possible embodiment;
- figure 1A shows a detail of the irrigation machine according to the present invention;

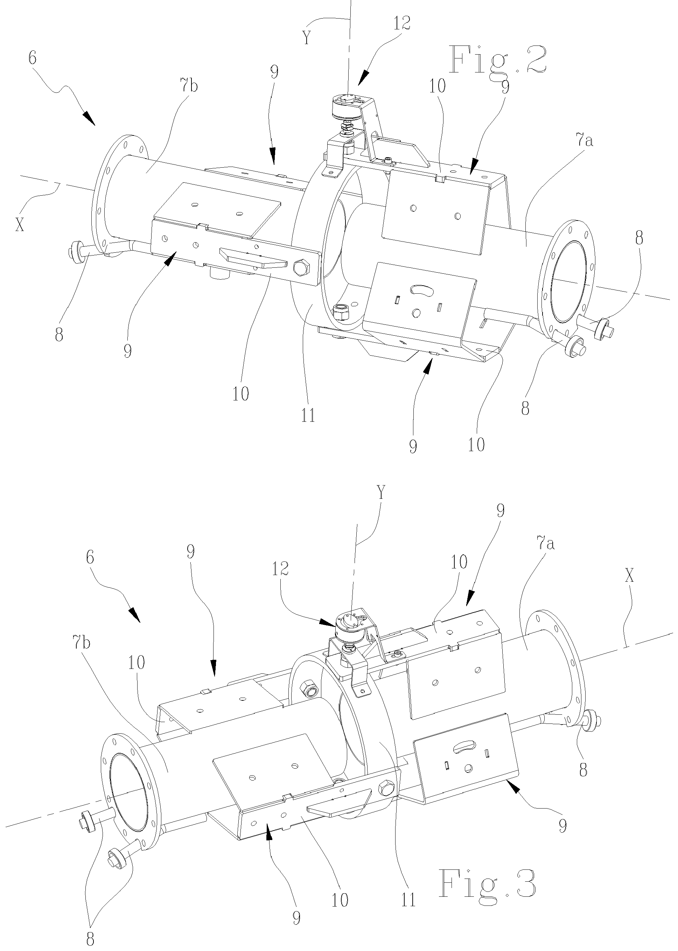

- figure 2 shows a perspective view of a joint of an irrigation machine according to the present invention;
- figure 3 shows a perspective view of the joint according to the present invention.

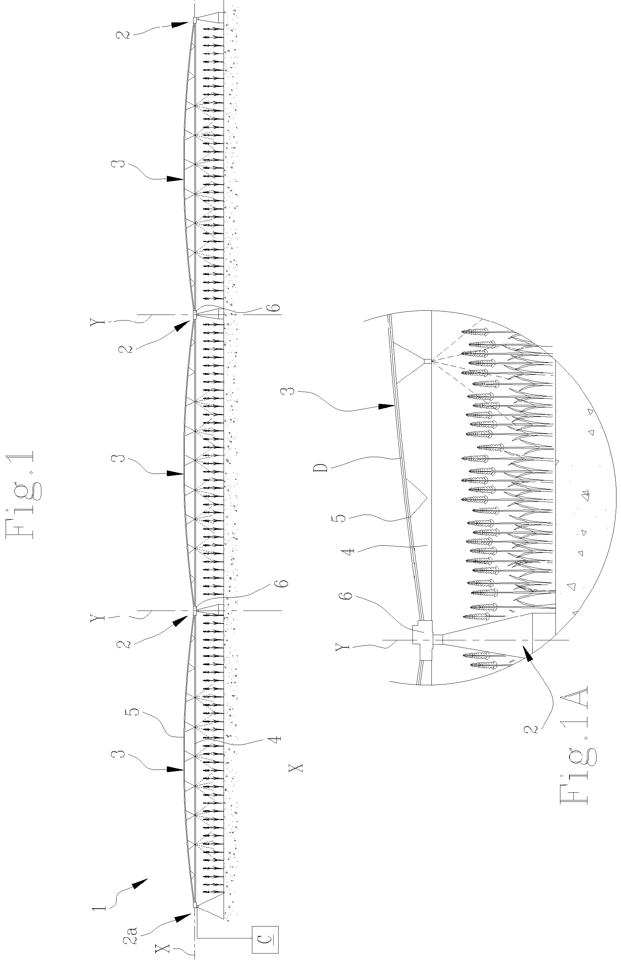

In figure 1, reference number 1 denotes an irrigation machine according to a possible embodiment.

In particular, by way of non-limiting example, the present invention refers to an irrigation machine 1 set up in a "pivot" configuration.

In the pivot configuration there is a first support element 2a, fixed to the terrain, and a series of support elements 2 each having a motorised movement carriage.

In order to realise a different possible configuration, it is sufficient to replace the fixed support element, denoted in the drawings by reference numeral 2a, with a further self-propelling support element 2 to obtain a "linear" or "hippodrome" configuration.

The irrigation machine 1 according to the present invention therefore comprises a plurality of support elements 2 which delimit and support a plurality of spans 3, preferably having a reticular structure.

Each span 3 houses known means for transporting and dispensing water, in the particular embodiment illustrated in the images appended by way of non-limiting example the means for transporting and dispensing water are tubes denoted by number 4.

According to a preferred possible embodiment, each adjacent pair of spans 3 is connected by a joint 6 comprising a pair of tubular flanges 7 configured so as to be connected with respective tubes 5 housed in the two spans 3 which are connected by the joint 6 itself, thus creating a break in continuity for each tube of the plurality of tubes.

Further, the joint 6 can have another tube 8 configured for being connected at an end thereof with a respective end of the tube 4 of the respective spans 3 and in which the water is passed during use.

Each flange 7 has radial expansions 9 that are diametrically opposite and each is adapted to support a respective longitudinal arm 10. The longitudinal arms 10 of each flange 7 function as connecting elements of the tubular flanges 7 with diametrically opposite portions of a central annular body 11.

In detail, each joint 6 is a universal joint, configured to enable a relative rotation between the two respective tubes 5 about two axes that are perpendicular and incident to one another, in particular, a first axis, or vertical axis Y, perpendicular to the rest plane of the support elements 2 and a second axis, or horizontal axis X, perpendicular to the first and parallel to a main extension direction of the spans 3.

Each joint 6 can house a digital angular sensor 12, preferably a Hall-effect encoder, mounted on the first flange 7a and configured for measuring the angle formed between the two respective spans 3 about the vertical axis Y. This angle is measured, in particular, starting from a reference angle (or "zero") established by means of a calibrating procedure which will be described later.

If, during the irrigation operations, the control unit "C" receives, from the angular digital sensor 12, the reading indicating a growing de-alignment angle, it consequently acts in such a way as to recover this de-alignment and return the machine 1 into a stable operating condition, thus enabling preventing the de-alignment from becoming more acute and bringing the machine 1 into an unstable operating condition, with the further risk of a possible breakage thereof.

For example, on increasing the de-alignment angle, the unit activates an increase in velocity to recover the angle or reduces the velocity when there is an opposite situation in which the angle assumes values indicating an anticipation of the carriage with respect to the optimal situation.

The control unit "C" can incorporate a satellite navigation system, for example a Global Positioning System, configured for detecting the spatial position of at least a portion of the irrigating machine 1. In this way it is possible, in the case of machines predisposed according to a linear or hippodrome configuration, to cause the machine 1 to follow a predefined and optimised path as a function of the shape and dimensions of the surface to be irrigated.

In a preferred embodiment, all the digital angular sensors 12 are connected to the control unit "C" by means of a common single connecting cable, using a transmission protocol of the CAN-bus type.

Again, in a preferred embodiment, each sensor of the plurality of sensors configured for detecting the operating parameters of the irrigation machine 1 is connected to the control unit "C" by means of a common single connecting cable, preferably the same as used for the connection of the digital angular sensors 12, using a transmission protocol of the CAN-bus type.

The CAN-bus protocol is a serial protocol that can be used for connecting a plurality of devices by means of a single-cable network; in this way it is possible to considerably reduce the space necessary for housing the cables necessary for the transmission of signals of the plurality of sensors installed on the machine, avoiding the need to install a dedicated cabling for each single sensor, or for each single type of sensor, as occurs instead in known irrigation machines.

Initially the irrigation machine 1 is mounted on a terrain to be irrigated, and the mounting is performed by positioning the support elements 2 according to a reciprocally aligned or nearly-aligned orientation. This alignment is preferably done visually by the operators, i.e. in a sufficiently approximate way without any need for a perfect alignment. This alignment will constitute the "zero" or reference position in the whole working process of the machine, and therefore the ideal alignment position that the machine will tend to follow automatically as an objective.

Once the irrigation machine 1 is ready, it is possible, via the control unit "C", to initialise all the digital angular sensors 6 preferably at the same time. This initialisation corresponds to clearing the reading of each sensor so that the starting position constitutes the angular position with respect to which the angular de-alignments are evaluated.

Following the initialisation step the irrigation machine 1 can be started up, causing the support elements 2 to move continuously due to the movement carriages.

During the operation of the machine, the step of determining the velocity of movement of the support elements 2 is advantageously and preferably carried out continuously as a function of the de-alignment angle measured by the digital angular sensors 12 of the joints 6.

In particular, in the light of the particular structure of the irrigation machine 1, each span 3 is free to rotate, for example, about the vertical axis Y with respect to an adjacent span 3, having the central annular body 11 of the joint 6 as a fulcrum of the rotation.

During the irrigation operations it is possible, owing to external causes, that the advancement velocity of the movement carriages of the support elements 2 is modified, causing an undesired rotation of the span 3 supported by them, with an anticipation or delay with respect to the adjacent span (the most internal span in the case of pivot-type irrigators).

This rotation, if maintained within the predefined tolerance limits, does not cause any particular problems to the irrigation machine 1, but if these tolerance values are exceeded operating problems and even breakage of the machine itself can occur.

In order to avoid this, the digital angular sensors 12 are housed on the joints 6, which digital angular sensors 12 are configured for detecting, at any time (in real-time), the de-alignment angle of each pair of adjacent spans 3.

The control unit "C" is configured for receiving, from the sensors, respective identifying signals of the angular de-alignments and for modifying the advancement velocity of the support elements 2 as a function of the measurements carried out by the angular sensors 12.

In operation, if the sensor 12, housed on the joint 6 which connects a pair of spans 3, detects an angle which exceeds the pre-set tolerance value, this means that at least one of the support elements 2 supporting that pair of spans 3 has changed its speed or in any case it is moving at a speed that is too different with respect to the adjacent support elements 2, causing loss of alignment between the two spans 3.

To correct this irregularity and realign the spans 3, the control unit C is configured for modifying the speed of at least one of the support elements 2 involved, so as to correct the de-alignment.

Additionally, or alternatively, a local logic control can be included at each joint 6, which control unit can be equipped with a microprocessor or microcontroller to define a respective "node" which may or may not be connected to the central control unit C.

In a case where the local logic controls are present, each node of the system processes the information of the sensor 12 associated to the relative joint and establishes how the speed of the motor moving the respective support element should be modified, preferably commanding the motor directly and independently.

As mentioned, each node can be connected to the unit C via the above-mentioned CAN-bus.

Owing to the continuous regulation of the advancement velocity of the support elements, the motors associated to the respective carriages advantageously have a more regular operation with respect to the intermittent operation of the known systems, causing fewer stresses on the motors and thus increasing the working life thereof.

Further, the continuous movement of the irrigation machine 1 allows to obtain a more homogeneous distribution of the water during irrigation.

An irrigation machine 1 according to the present invention further enables a considerable reduction in the times required for setting up, as the digital angular sensors can be initialised all together at the same time rather than one at a time.

Further, the presence of a control unit "C" gathering information from all the digital angular sensors 12 of all the joints 6 enables having an overall control of the machine 1 that is more precise and accurate, as the decisions relative to the change of movement velocity of each single support element 2 can be taken as a function not only of the information coming from the digital angular sensor 12 relative to the support element 2 data, but also as a function of the information coming from all the digital angular sensors 12 of the machine 1.

In this way it is always possible to optimally evaluate, as a function of the information gathered, which support elements 2 should be slowed or accelerated so as to maintain a correct alignment of the structural components of the machine 1.

The irrigation machine 1 can also comprise a plurality of sensors configured to detect operating parameters of the machine, among which for example, and by way of non-limiting example, the following can be comprised: pressure sensors of the water internally of the transport means 5, flow meters for measuring the quantity di water dispensed, pressure sensors in the wheels of the movement carriages.

The irrigation machine 1 further comprises a control unit "C" configured to evaluate the information received from the plurality of sensors and to regulate the operation of the irrigation machine 1 using the values of said parameters gathered by said control unit "C".

If, for example, during the irrigation operations, the control unit "C" receives, from the angular digital sensor 12, the reading of a growing de-alignment angle, it consequently acts in such a way as to recover this de-alignment and return the machine 1 into a stable operating condition, thus enabling preventing the de-alignment from becoming more acute and bringing the machine 1 into an unstable operating condition, with the further risk of a possible breakage thereof.

In this particular case, on increasing the de-alignment angle, the unit activates an increase in velocity to recover the angle or reduces the velocity when there is an opposite situation in which the angle assumes values referred to an anticipation of the carriage with respect to the optimal situation.

The control unit "C" can further implement a satellite navigation system, for example a Global Positioning System, configured for detecting a spatial position of at least a portion of the irrigating machine 1. In this way it is possible, in the case of machines predisposed according to a linear or hippodrome configuration, to cause the machine 1 to follow a predefined and optimised path as a function of the shape and dimensions of the surface to be irrigated.

The transmission of information between each sensor of the plurality of sensors and the control unit "C" is done using the CAN-bus communication protocol.

The CAN-bus protocol is a serial protocol usable for connecting a plurality of devices by means of a single-channel network using a physical connection, via at least a cable in common among a plurality of sensors, or a wireless connection, for example exploiting radio waves, infrared radiation etc; in both cases it is possible to considerably reduce the space necessary for housing the cables necessary for the transmission of signals of the plurality of sensors installed on the machine, as it is possible to avoid the need to install a dedicated cabling for each single sensor, as occurs instead in known irrigation machines. In a case in which a physical connection is made, each span 3 can advantageously also house the cabling necessary for correct operation of the irrigation machine 1; in the particular embodiment illustrated in the appended images the cabling is passed through a further tube 5, thus ensuring greater protection from external agents.

According to a preferred embodiment, each sensor of the plurality of sensors is connected to the control unit "C" by means of a single connecting cable "D" common to all the sensors.

Once the irrigation machine 1 is ready, it is possible, via the control unit "C", to initialise all the sensors, preferably by initialising at the same time sensors belonging to the same type.

For the digital angular sensors 12, for example, this initialisation corresponds to the clearing the reading of each sensor so that the starting position constitutes the angular position with respect to which the angular de-alignments are evaluated.

Following the initialisation step the irrigation machine 1 can be started up, causing the support elements 2 to move continuously due to the movement carriages.

During the whole operation the control unit "C" gathers a plurality of parameters measured by the plurality of sensors and regulates the operation of the irrigation machine 1 using the measured values.

For example, it is possible that during the irrigation operations, owing to external causes, the movement carriages of the support elements 2 modify their advancement velocity, causing an undesired rotation of the span 3 supported by them, with an anticipation or delay with respect to the adjacent span (the most internal span in the case of pivot-type irrigators).

This rotation, if maintained within the predefined tolerance limits, does not cause any particular problems to the irrigation machine 1, but if these tolerance values are exceeded operating problems and even breakage of the machine itself can occur.

In order to avoid this, the control unit "C" is configured for detecting at any moment the operating parameters of the machine 1 which are sent thereto by the plurality of sensors using the CAN-bus protocol.

In particular, the control unit "C" is configured to receive identifying signals of the angular de-alignments and for modifying the advancement velocity of the support elements 2 as a function of the measurements carried out by the angular sensors 12.

In operation, considering for example the information received from the angular sensor 12, if the sensor 12, housed on the joint 6 which connects a pair of spans 3, detects an angle which exceeds the pre-set tolerance value, this means that at least one of the support elements 2 supporting that pair of spans 3 has changed its speed or that in any case it is moving at a speed that is too different with respect to the adjacent support elements 2, causing loss of alignment between the two spans 3.

To correct this irregularity and realign the spans 3, the control unit "C" is configured for transmitting a command for modifying the speed of at least one of the support elements 2 involved, so as to correct the de-alignment.

It is advantageously possible to connect the control unit with a device such as: a tablet, smartphone or computer, enabling in this way a remote management of the irrigation machine 1.

To enable remote management of the irrigation machine 1, the control unit "C" can be equipped with transmission means which communicate with the remote devices for example via radio frequencies, in particular the control unit "C" can comprise radio antennae and SIM modules.

As already mentioned, owing to the continuous regulation of the advancement velocity of the support elements, the motors associated to the respective carriages have a more regular operation with respect to the intermittent operation of the known systems, causing fewer stresses on the motors and thus increasing the working life thereof.

Further, the continuous movement of the irrigation machine 1, permitted by the CAN-bus communication protocol, allows to obtain a more homogeneous distribution of the water during irrigation.

According to the present invention, the plurality of sensors is advantageously connected to the control unit using a CAN-bus communication protocol, enabling a significant reduction both in the size caused by the sensor cabling and in the weight the spans 3 have to bear. An irrigation machine 1 according to the present invention further enables a considerable reduction in the times required for setting up, as the sensors of the same type can be initialised all together at the same time rather than one at a time.

Further, the presence of a control unit "C" gathering information from all the sensors enables having an overall control of the machine 1 that is more precise and accurate, as the decisions relative to the change of operating conditions of each single component of the machine 1 can be taken as a function not only of the information coming from the single sensor, but evaluating the information coming from all the sensors of the machine 1.

## Claims

1. An irrigation machine (1) comprising:
- a plurality of supporting spans (3), delimited and supported by respective self-propelled support elements (2), wherein each support element (2) has at least a respective movement carriage provided with a respective motor;
- means for transport and dispensing of water (4) supported by said plurality of spans (3);
- a plurality of joints (6), each interposed between a respective pair of adjacent spans (3) and configured to connect said adjacent spans (3);
- a plurality of sensors configured to detect operating parameters of the machine; and
- a control unit (C) configured to manage the operation of said machine according to the operating parameters received from said sensors;
**characterised in that** it comprises transmission means (D) which connect said sensors to the control unit (C) and are configured for a communication according to the CAN-bus protocol, and **in that** each joint (6) houses at least one of said sensors, constituted by an electronic angular sensor of a digital type (12), which is configured to measure a de-alignment angle between two adjacent spans (3), the control unit (C) being configured to continuously control and vary the advancement velocity of the carriages as a function of the de-alignment angles measured by the angular sensors (12) of said joints (6).

2. The machine according to claim 1, wherein said transmission means comprise at least a connecting cable (D), which connects the sensors to the control unit (C).

3. The machine according to claim 1 or 2, wherein the plurality of sensors configured to detect operating parameters of the machine comprises sensors belonging to at least one from among following categories: digital angular sensors to measure a de-alignment angle between two adjacent spans, sensors to measure a pressure of the water in said means for transport and dispensing, flow-meters to verify a quantity of water dispensed, satellite navigation systems, pressure sensors to measure a tyre pressure of said self-propelled support elements (2).

4. The machine according to at least one of the preceding claims, wherein said plurality of sensors comprises, for each joint (6), a digital angular sensor (12) configured to measure a de-alignment angle between two adjacent spans (3), and wherein said control unit (C) is configured to continuously control and vary the advancement velocity of the self-propelled support elements (2) as a function of the de-alignment angles measured by the angular sensors (12) of said joints (6) so as to minimise the de-alignment angle between adjacent spans (3).

5. The machine according to claim 4, wherein said self-propelled support elements (2) are defined by carriages provided with pneumatic wheels, and wherein said plurality of sensors further comprises, for each carriage, at least one pressure sensor of a respective pneumatic wheel.

6. The machine according to claim 4 or 5, wherein said spans bear respective irrigation nozzles, each of which is provided with a respective sensor to control water dispensing, said angular sensors and said sensors to control water dispensing being connected to the control unit (C) via said transmission means (D).

7. The machine according to any one of claims 2 - 6, wherein said sensors are distributed along an extension of the machine along said spans (3) and wherein said cable (D) extends along the extension of the machine along said spans (3).

8. The machine according to any one of the preceding claims, wherein the control unit (C) comprises an interface for remote management using a tablet, smart-phone or computer.

9. The machine according to any one of claims 2 - 8, wherein all said sensors are connected to the control unit (C) by means of a common single connecting cable (D).

10. The machine according at least one of the preceding claims, wherein the spans (3) have respective metal tubular members connected by said joints (6), wherein each joint (6) is defined by a universal joint, configured to enable a relative rotation between the two respective metal tubular members about two axes that are perpendicular to one another and incident, and wherein the angular sensor (12) of the joint (6) is arranged to detect an angle formed between the two metal tubular members about one of said two axes.

11. The machine according to the preceding claim, wherein said perpendicular axes comprise a horizontal axis (X) and a vertical axis (Y), said sensor (12) being arranged to detect the angle formed between the two metal tubular members about the vertical axis (Y).

12. The machine according to claim 10 or claim 11, wherein said universal joint (6) comprises a pair of tubular flanges (7) each stably connectable to a respective one of said metal tubular members of the respective spans, a ring (11) rotatably coupled to a first flange (7a) of said tubular flanges rotatably about a first one of said two axes and rotatably coupled to the second tubular flange (7b) rotatably about the second one of said axes, and wherein said sensor (12) is mounted on the first flange (7a) and is configured to detect the rotation angle of the ring (11) with respect to the first flange (7a).

13. The machine according to the preceding claim, wherein the sensor is a Hall-effect encoder (12).

14. The machine according to any one of the preceding claims, wherein each carriage is provided with pneumatic wheels and further comprises at least one pressure sensor for at least one of the wheels of the carriage.

15. The machine according to the preceding claim, wherein the control unit is further connected to said pressure sensors and is configured to regulate a rotation velocity of the motor of each carriage as a function of a pressure value detected for said wheel of the carriage.
